# EUROPÄISCHE PATENTSCHRIFT

(11) **EP 1 955 886 B1**
(45) Veröffentlichungstag und Bekanntmachung des Hinweises auf die Patenterteilung: **14.08.2013**
(21) Anmeldenummer: 07023287.1
(22) Anmeldetag: 30.11.2007
(51) Int. Cl.: B60K 13/04, B62D 35/02

(54) **Kraftfahrzeug**
Motor vehicle
Véhicule automobile

(30) Priorität: 07.02.2007 DE 102007006029
(43) Veröffentlichungstag der Anmeldung: 13.08.2008
(73) Patentinhaber: Dr. Ing. h.c. F. Porsche AG, 70435 Stuttgart (DE)
(72) Erfinder: Seidler, Uwe, 71034 Böblingen (DE)

(56) Entgegenhaltungen:
- EP-A- 1 151 909
- DE-A1- 10 359 009
- DE-A1- 19 836 970
- JP-A- 9 175 198
- US-A1- 2002 185 893

## Beschreibung

Die vorliegende Erfindung betrifft ein Kraftfahrzeug mit einem wärmeabstrahlenden ersten und einem temperaturempfindlichen zweiten Bauteil gemäß dem Oberbegriff des Anspruchs 1.

Aus der DE 198 36 970 C2 ist ein Mitteltunnel eines Kraftfahrzeugs mit einem Wärmeschutzblech sowie einem darin geführten Teil einer Abgasanlage bekannt. Hierbei ist das Wärmeschutzblech von einer Tunnelwandung beabstandet und als nach unten offener Längskanal ausgebildet. Die Abgasanlagenteile sind dabei mit einem geringen, einen kontaktverhindernden Abstand zur angrenzenden Wärmeschutzblechwand im Längskanal aufgenommen, so dass das Wärmeschutzblech zugleich eine Luftleiteinrichtung bildet. Zwischen den Abgasanlagenteilen und dem Wärmeschutzblech wird dabei ein Warmraum gebildet, während zwischen der Tunnelwandung und dem Wärmeschutzblech ein Kaltraum gebildet ist. Je nach Betriebsdauer und je nach Wärmeentwicklung der Abgasanlagenteile erhitzt sich jedoch das Wärmeschutzblech, wodurch eine Wärmeübertragung vom Warmraum in den Kaltraum gegeben ist. Je nach Wärmeentwicklung des Wärmeschutzbleches kann sich dabei auch die Luft im Kaltraum derart stark erwärmen, dass ein im Kaltraum gelegenes temperaturempfindliches Bauteil nicht ausreichend temperaturgeschützt ist.

Ein weiteres Wärmeschutzelement für eine Abgasanlage eines Kraftfahrzeugs ist beispielsweise aus der DE 28 19 371 C2 bekannt.

Die US 2002/185893 A1 offenbart am Kraftfahrzeug mit einem wärmeabstrahlenden ersten Bauteil, insbesondere einer Abgasanlage und einem darüberliegend angeordneten temperaturempfindlichen zweiten Bauteil - einem Boden des Fahrgastraumes -, wobei zwischen beiden Bauteilen ein mehrschalig ausgebildetes Wärmeschutzelement angeordnet ist.

Im Fahrbetrieb des Fahrzeuges wird durch den Fahrtwind der Katalysator der Abgasanlage, der Warmraum und das mehrschalige Wärmeschutzelement gekühlt, nicht jedoch der Kaltraum bzw. das temperaturempfindliche zweite Bauteil.

Die vorliegende Erfindung beschäftigt sich mit dem Problem, für ein Kraftfahrzeug der gattungsgemäßen Art eine verbesserte Ausführungsform anzugeben, bei welcher temperaturempfindliche Bauteile vor einer Temperaturbelastung eines benachbart angeordneten wärmeabstrahlenden Bauteils besonders effektiv geschützt werden können.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, zwischen einem wärmeabstrahlenden ersten Bauteil und einem benachbart hiervon angeordneten temperaturempfindlichen zweiten Bauteil zumindest ein Wärmeschutzelement anzuordnen, welches den zwischen beiden Bauteilen liegenden Raum in einen, dem wärmeabstrahlenden Bauteil zugewandten Warmraum und einen davon abgewandten, dem temperaturempfindlichen Bauteil zugewandten Kaltraum unterteilt, wobei zusätzlich eine Belüftungseinrichtung vorgesehen ist, die den Kaltraum mit Kühlluft versorgt und dadurch die Kühlung des temperaturempfindlichen Bauteils unterstützt. Im Unterschied zu einem rein isolatorisch wirkenden Kaltraum, welcher sich im Laufe der Zeit je nach Leistung des wärmeabstrahlenden Bauteils ebenfalls erhitzen kann und dadurch zu einer Wärmeübertragung auf das temperaturempfindliche Bauteil führt, ist dies mit der erfindungsgemäßen Belüftungseinrichtung nahezu vollkommen ausgeschlossen, da dem Kaltraum, vorzugsweise kontinuierlich Kühlluft zugeführt wird und dadurch eine Wärmeübertragung vom Warmraum in den Kaltraum und damit auf das temperaturempfindliche Bauteil erheblich reduziert werden kann. Bei der Belüftungseinrichtung handelt es sich vorzugsweise um eine passive Belüftungseinrichtung, welche dem Kaltraum Kühlluft, beispielsweise in Form von Fahrtwind, zuführt. Denkbar ist aber auch je nach Wärmeleistung des wärmeabstrahlenden Bauteils eine aktive Belüftungseinrichtung, welche dem Kaltraum, beispielsweise mittels eines Gebläses, Kühlluft zuführt. Letzteres hätte den großen Vorteil, dass der Kaltraum auch bei einem stehenden Kraftfahrzeug mit Kühlluft versorgt wird. Durch die erfindungsgemäße Lösung lässt sich somit ein besonders effektiver Wärmeschutz für das temperaturempfindliche Bauteil erreichen, welcher zugleich konstruktiv einfach und daher kostengünstig zu realisieren ist.

Zweckmäßig weist die Belüftungseinrichtung einen spaltartigen Lufteinlass (NACA-Einlass) und einen sich daran anschließenden geschlossenen Kanal zur Luftführung auf. Dies bietet den Vorteil, den Lufteinlass an eine konstruktiv günstige Stelle zu verlegen und die Kühlluft mittels des sich an den Lufteinlass anschließenden Kanals direkt dem Kaltraum und/oder direkt dem temperaturempfindlichen Bauteil zuleiten zu können. Sogenannte NACA-Einlässe wurden ursprünglich für die Flugzeugtechnik entwickelt und bieten bei geringem aerodynamischem Widerstand eine große Lufteintrittsmenge, wodurch einerseits der Luftwiderstand des erfindungsgemäßen Kraftfahrzeugs nahezu unverändert bleibt und andererseits eine ausreichende Versorgung des Kaltraums mit Kühlluft gewährleistet werden kann.

Bei einer weiteren vorteilhaften Ausführungsform der erfindungsgemäßen Lösung ist der Lufteinlass in einer Unterbodenverkleidung des Kraftfahrzeugs angeordnet. Hierbei ist denkbar, dass der Lufteinlass einstückig mit der Unterbodenverkleidung ausgebildet und zusammen mit dieser in einem Arbeitsschritt herstellbar ist. Zudem kann der Lufteinlass an einer konstruktiv besonders günstigen Stelle der Unterbodenverkleidung angeordnet werden, wodurch eine besonders effektive Kühlung des Kaltraumes gewährleistet werden kann.

Bei einer weiteren vorteilhaften Ausführungsform der erfindungsgemäßen Lösung ist benachbart zum temperaturempfindlichen zweiten Bauteil ein weiteres Wärmeschutzelement angeordnet, welches das zweite Bauteil vom Kaltraum trennt. Bei sehr temperaturempfindlichen zweiten Bauteilen, bietet das weitere Wärmeschutzelement eine zusätzliche Abschirmung gegenüber einer Wärmebelastung, wobei denkbar ist, dass die Belüftungseinrichtung nunmehr Kühlluft lediglich dem zwischen den beiden Wärmeschutzelementen liegenden Kaltraum und/oder dem zwischen dem zweiten Wärmeschutzelement und dem temperaturempfindlichen Bauteil liegenden Raum zuführt. Insbesondere letzteres verbessert die Abschirmung des temperaturempfindlichen zweiten Bauteils gegenüber der wärmeabstrahlenden ersten Bauteils nochmals erheblich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht auf ein erfindungsgemäßes Wärmeschutzelement,
- Fig. 2: eine Schnittdarstellung im Bereiche einer Schnittebene A-A,
- Fig. 3: eine Schnittdarstellung im Bereich einer Schnittebene B-B.

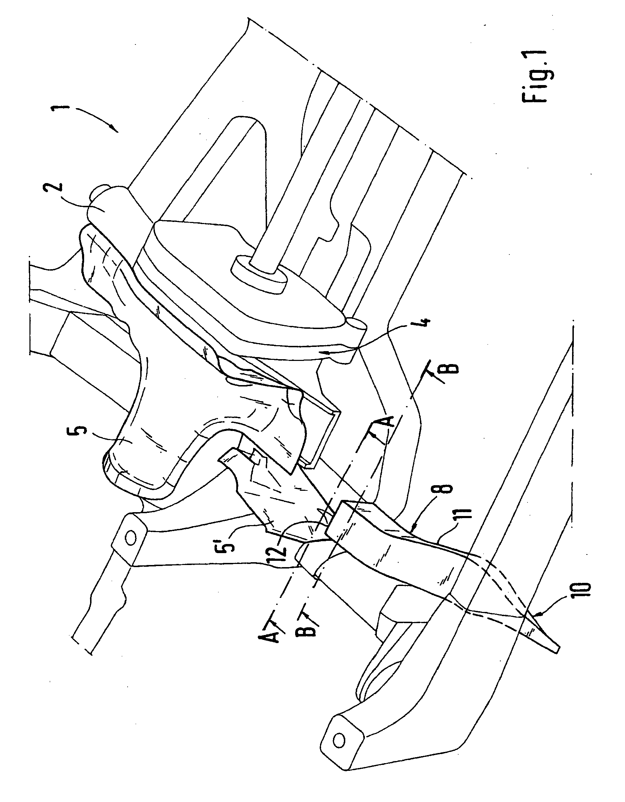

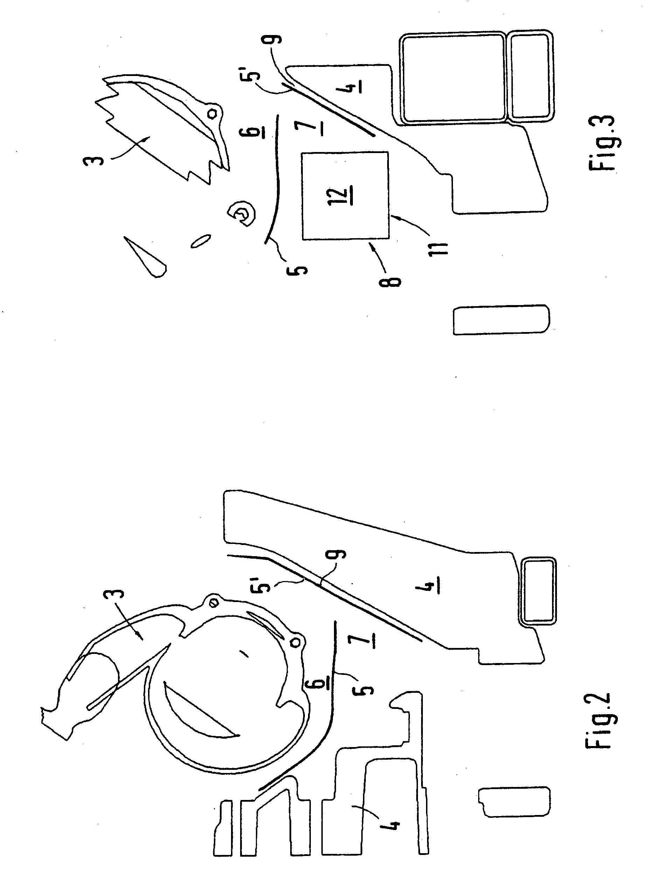

Gemäß Fig. 1 ist eine Vorderwagen-Chassis-Struktur 1 eines im Übrigen nicht dargestellten Kraftfahrzeugs gezeigt, wobei zum Antrieb einer ebenfalls nicht gezeigten Vorderachse des Kraftfahrzeugs ein Getriebe 2, insbesondere ein Vorderachsegetriebe, vorgesehen ist. In enger Nachbarschaft zu diesem Getriebe 2 ist ein wärmeabstrahlendes erstes Bauteil 3, insbesondere eine Abgasanlage (vgl. Fig. 2 und 3) angeordnet, welche sich beim Betrieb des Kraftfahrzeugs aufgrund der heißen Motorabgase stark erwärmt. In geringerem Abstand zum ersten, wärmeabstrahlenden Bauteil 3 ist gemäß den Fig. 2 und 3 ein zweites, temperaturempfindliches Bauteil 4 angeordnet, wobei auch mehrere temperaturempfindliche Bauteile benachbart zum wärmeabstrahlenden Bauteil 3 angeordnet sein können. Eine zu starke Erwärmung des einen zweiten Bauteils 4 muss dabei unbedingt vermieden werden, da sich eine derartige Erwärmung negativ auf das zweite Bauteil 4 auswirken kann. Aus diesem Grunde ist zwischen den beiden Bauteilen 3 und 4 zumindest ein Wärmeschutzelement 5 angeordnet, das einen zwischen dem ersten Bauteil 3 und dem Wärmeschutzelement 5 liegenden Warmraum 6 von einem zwischen dem zweiten Bauteil 4 und dem Wärmeschutzelement 5 liegenden Kaltraum 7 trennt. Eine direkte Wärmeabstrahlung vom ersten Bauteil 3 auf das temperaturempfindliche zweite Bauteil 4 wird dadurch effektiv unterbunden.

Die im Kaltraum 7 vorhandene Luft wirkt dabei als Isolator, welcher eine schnelle Wärmeübertragung vom Warmraum 6 über den Kaltraum 7 auf das zweite Bauteil 4 zumindest bremst. Um eine Wärmeübertragung zwischen dem ersten Bauteil 3 und dem zweiten Bauteil 4 noch stärker reduzieren zu können, ist nunmehr erfindungsgemäß eine Belüftungseinrichtung 8 (vgl. Fig. 1) vorgesehen, welche zumindest im Fahrbetrieb des Kraftfahrzeugs Kühlluft zur Kühlung des temperaturempfindlichen zweiten Bauteils 4 in den Kaltraum 7 leitet. Die Belüftungseinrichtung 8 ist dabei vorzugsweise als passive Belüftungseinrichtung ausgebildet, so dass eine Zufuhr von Kühlluft in den Kaltraum 7 im wesentlichen nur beim Fahren des Kraftfahrzeugs erfolgt. Generell ist aber auch eine aktive Belüftungseinrichtung vorstellbar, beispielsweise ein Gebläse, welches Kühlluft auch bei stehendem Kraftfahrzeug in den Kaltraum 7 bläst.

Durch den ständigen Austausch der Luft im Kaltraum 7 kann diese sich nicht oder nur sehr begrenzt erwärmen, wodurch eine Übertragung der Wärme aus dem Warmraum 6 auf das zweite Bauteil 4 vorzugsweise vollständig unterbunden wird. Wie den Fig. 2 und 3 weiter zu entnehmen ist, kann in direkter Nachbarschaft zum temperaturempfindlichen zweiten Bauteil 4 ein weiteres Wärmeschutzelement 5' angeordnet sein, welches das zweite Bauteil 4 vom Kaltraum 7 trennt. Dabei ist denkbar, dass die Belüftungseinrichtung 8 den Kaltraum 7 und/oder einen zwischen dem weiteren Wärmeschutzelement 5' und dem zweiten Bauteil 4 gelegenen Raum 9 mit Kühlluft versorgt. Darüber hinaus kann zumindest eines der beiden Wärmeschutzelemente 5, 5' als Luftleitelement ausgebildet sein und einen von der Belüftungseinrichtung 8 in den Kaltraum 7 und/oder in den Raum 9 beförderten Luftstrom ab- bzw. umlenken.

Gemäß Fig. 1 sind die Wärmeschutzelemente 5, 5' als dreidimensionale Formteile ausgebildet, welche gemäß einer speziellen Ausführungsform aus Metall, insbesondere aus Blech, ausgebildet sind.

Die Belüftungseinrichtung 8 weist einen spaltartigen Lufteinlass 10 (NACA-Einlass) sowie einen sich daran anschließenden geschlossenen Kanal 11 zur Lüftführung auf. Dieser Kanal 11 kann beispielsweise eine eckige oder eine runde Querschnittsgestalt aufweisen und zudem a konstruktive Randbedingungen im Unterbodenbereich des Kraftfahrzeugs angepasst sein. Gemäß Fig. 1 weist der Kanal 11 einen im wesentlichen s-förmigen Verlauf auf. Münden kann der Kanal 11 beispielsweise direkt im Kaltraum 7 oder stromauf desselben, wobei eine Auslassöffnung 12 vorzugsweise so ausgebildet ist, dass sie Kühlluft dem Kaltraum 7 oder direkt dem temperaturempfindlichen Bauteil 4 zuleitet. An seinem, der Auslassöffnung 12 abgewandten Ende, ist der Lufteinlass 10 angeordnet, welcher beispielsweise auch in eine Unterbodenverkleidung des Kraftfahrzeugs integriert sein kann.

Beim Fahren des Kraftfahrzeugs 1 tritt Kühlluft gemäß Fig. 1 über den Lufteinlass 10 der Belüftungseinrichtung 8 in den Kanal 11 ein und wird in diesem bis zur Auslassöffnung 12 geführt. Nach dem Verlassen des Kanals 11 tritt die Kühlluft in den Kaltraum 7 ein und sorgt dort für eine kontinuierlichen Luftaustausch, so dass eine Wärmeübertragung vom Warmraum 6 über den Kaltraum 7 auf das temperaturempfindliche Bauteil 4 vorzugsweise gänzlich unterbunden werden kann. Eine Befestigung des/der Wärmeschutzelemente 5, 5' kann dabei beispielsweise mittels nicht näher bezeichneter Schrauben erfolgen, wodurch im Wartungsfall ein leichter Austausch bzw. ein leichtes Abnehmen des Wärmeschutzelementes 5, 5' damit ein erleichterter Zugang zum Getriebe 2 gewährleistet werden kann.

## Patentansprüche

1. Kraftfahrzeug mit einem wärmeabstrahlenden ersten Bauteil (3), insbesondere einer Abgasanlage, und einem benachbart hierzu angeordneten temperaturempfindlichen zweiten Bauteil (4), wobei zwischen den beiden Bauteilen (3, 4) zumindest ein Wärmeschutzelement (5) angeordnet ist, das einen zwischen dem erstem Bauteil (3) und dem Wärmeschutzelement (5) liegenden Warmraum (6) von einem zwischen dem zweitem Bauteil (4) und dem Wärmeschutzelement (5) liegenden Kaltraum (7) trennt, **dadurch gekennzeichnet, dass** bei dem mit einer Unterbodenverkleidung versehenen Kraftfahrzeug das wärmeabstrahlende erste Bauteil (3) oberhalb des temperaturempfindlichen zweiten Bauteils (4) angeordnet ist und sich der durch das zumindest eine Wärmeschutzelement (5) gebildete Warmraum (6) oberhalb des Kaltraumes (7) erstreckt, und dass eine Belüftungseinrichtung (8) vorgesehen ist, die zumindest im Fahrbetrieb des Kraftfahrzeugs Kühlluft nur in den Kaltraum (7) zur Kühlung des temperaturempfindlichen zweiten Bauteils (4) leitet, wobei die Belüftungseinrichtung (8) einen an der Unterbodenverkleidung des Kraftfahrzeugs angeordneten NACA-Lufteinlass (10) und einen sich daran anschließenden geschlossenen Kanal (11) zur Luftführung mit einer stromauf des Kaltraumes (7) gelegenen Auslassöffnung (12) aufweist, die so ausgebildet ist, dass sie Kühlluft dem Kaltraum (7) oder direkt dem temperaturempfindlichen Bauteil (4) zuleitet.

2. Kraftfahrzeug nach Anspruch 1, **dadurch gekennzeichnet, dass** benachbart zum temperaturempfindlichen zweiten Bauteil (4) ein weiteres Wärmeschutzelement (5') angeordnet ist, welches das zweite Bauteil (4) vom Kaltraum (7) trennt.

3. Kraftfahrzeug nach Anspruch 1 oder 2, **dadurch gekennzeichnet, dass** zumindest eines der Wärmeschutzelemente (5, 5') als Luftleitelement ausgebildet ist und einen von der Belüftungseinrichtung (8) in den Kaltraum (7) beförderten Luftstrom lenkt.

4. Kraftfahrzeug nach einem der Ansprüche 1 bis 3, **dadurch gekennzeichnet, dass** zumindest eines der Wärmeschutzelemente (5, 5')aus Metall, insbesondere aus Blech, ausgebildet ist.

5. Kraftfahrzeug nach Anspruch 1, **dadurch gekennzeichnet, dass** stromab des Kanals (11) ein weiteres Luftleitelement angeordnet ist, das so ausgebildet ist, dass es die Kühlluft dem Kaltraum (7) zuleitet.

6. Kraftfahrzeug nach einem der Ansprüche 1 bis 5, **dadurch gekennzeichnet, dass** das temperaturempfindliche zweite Bauteil (4) ein Getriebe (2), insbesondere ein Vorderachsgetriebe, ist.

## Claims

1. Motor vehicle with a heat-radiating first component (3), in particular an exhaust system, and with a temperature-sensitive second component (4) arranged adjacently to this, at least one heat protection element (5) being arranged between the two components (3, 4) and separating a hot space (6) lying between the first component (3) and the heat protection element (5) from a cold space (7) lying between the second component (4) and the heat protection element (5), **characterized in that**, in the motor vehicle, which is provided with an underbody trim, the heat-radiating first component (3) is arranged above the temperature-sensitive second component (4), and the hot space (6) formed by the at least one heat protection element (5) extends above the cold space (7), and **in that** a ventilation device (8) is provided, which, at least when the motor vehicle is being driven, conducts cooling air only into the cold space (7) for cooling the temperature-sensitive second component (4), wherein the ventilation device (8) has a NACA air inlet (10) arranged on the underbody trim of the motor vehicle and has, adjoining said air inlet, a closed duct (11) for air routing, the duct having an outlet port (12) which is situated upstream of the cold space (7) and which is designed such that it delivers cooling air to the cold space (7) or directly to the temperature-sensitive component (4).

2. Motor vehicle according to Claim 1, **characterized in that** a further heat protection element (5') is arranged adjacently to the temperature-sensitive second component (4) and separates the second component (4) from the cold space (7).

3. Motor vehicle according to Claim 1 or 2, **characterized in that** at least one of the heat protection elements (5, 5') is designed as an air conduction element and guides an air stream conveyed by the ventilation device (8) into the cold space (7).

4. Motor vehicle according to one of Claims 1 to 3, **characterized in that** at least one of the heat protection elements (5, 5') is produced from metal, in particular from sheet metal.

5. Motor vehicle according to Claim 1, **characterized in that** a further air conduction element is arranged downstream of the duct (11) and is designed such that it delivers cooling air to the cold space (7).

6. Motor vehicle according to one of Claims 1 to 5, **characterized in that** the second temperature-sensitive component (4) is a transmission (2), in particular a front axle transmission.

## Revendications

1. Véhicule automobile comprenant un premier composant (3) irradiant de la chaleur, en particulier une installation de gaz d'échappement, et un deuxième composant (4) adjacent à celui-ci, sensible à la température, au moins un élément de protection thermique (5) étant disposé entre les deux composants (3, 4), lequel sépare un espace chaud (6) situé entre le premier composant (3) et l'élément de protection thermique (5) d'un espace froid (7) situé entre le deuxième composant (4) et l'élément de protection thermique (5), **caractérisé en ce que**, lorsque le véhicule automobile est pourvu d'un revêtement sous caisse, le premier composant (3) irradiant de la chaleur est disposé au-dessus du deuxième composant (4) sensible à la température, et l'espace chaud (6) formé par l'au moins un élément de protection thermique (5) s'étend au-dessus de l'espace froid (7), et **en ce qu'**un dispositif de ventilation (8) est prévu, lequel, au moins pendant le mode de fonctionnement du véhicule automobile, conduit de l'air de refroidissement uniquement dans l'espace froid (7) pour refroidir le deuxième composant (4) sensible à la température, le dispositif de ventilation (8) présentant une entrée d'air NACA (10) disposée au niveau du revêtement sous caisse du véhicule automobile et un canal fermé (11) s'y raccordant pour le guidage de l'air, avec une ouverture de sortie (12) située en amont de l'espace froid (7), laquelle ouverture de sortie est conçue de telle sorte qu'elle conduise l'air de refroidissement à l'espace froid (7) ou directement au composant (4) sensible à la température.

2. Véhicule automobile selon la revendication 1, **caractérisé en ce qu'**à proximité du deuxième composant (4) sensible à la température est disposé un élément de protection thermique supplémentaire (5') qui sépare le deuxième composant (4) de l'espace froid (7).

3. Véhicule automobile selon la revendication 1 ou 2, **caractérisé en ce qu'**au moins l'un des éléments de protection thermique (5, 5') est réalisé sous forme d'élément de guidage d'air et dirige un flux d'air refoulé par le dispositif de ventilation (8) dans l'espace froid (7).

4. Véhicule automobile selon l'une quelconque des revendications 1 à 3, **caractérisé en ce qu'**au moins l'un des éléments de protection thermique (5, 5') est réalisé en métal, notamment en tôle.

5. Véhicule automobile selon la revendication 1, **caractérisé en ce qu'**en aval du canal (11) est disposé un élément de guidage d'air supplémentaire qui est conçu de telle sorte qu'il achemine l'air de refroidissement à l'espace froid (7).

6. Véhicule automobile selon l'une quelconque des revendications 1 à 5, **caractérisé en ce que** le deuxième composant (4) sensible à la température est une boîte de vitesses (2), en particulier une boîte de vitesses de train avant.
